# EUROPEAN PATENT APPLICATION

(11) **EP 4 560 552 A1**
(43) Date of publication of application: **28.05.2025**
(21) Application number: 23211439.7
(22) Date of filing: 22.11.2023
(51) Int. Cl.: G06Q 10/0832, G06Q 10/0833, G06Q 10/083, H04W 4/029

(54) **A METHOD AND A SYSTEM FOR RETREIVING RECORDED MONITORED DATA FROM A LOGGER DEVICE MONITORING A TRANSPORTED ASSET IN REAL TIME**

(71) Applicant: Controlant hf., 201 Kopavogur (IS)
(72) Inventor: ARNASON, Gudmundur Arni, 201 Kopavogur (IS)
(74) Representative: Inspicos P/S

(57) **Abstract**

This invention relates to a method and a system for retrieving potential missing environmental related data of an asset from a real time monitored shipment while the asset is transported from a beginning location to a destination location, comprising:
• associating a logger device, containing a Quick Response (QR) code, to the asset before the start of the transport, where the logger device is configured to collect and store environmental related data and regularly transmit the stored environmental related data together with geographical location data of the logger device to an external control computer,
wherein the method further comprises:
• evaluating by a processor if there is a potential data gap in the monitored and transmitted real time environmental related data for a given time-period and until the end of the transport and before closing the shipment of the asset at the destination location, where in case of a potential data gap is present,
• scanning, by an operator of a camera equipped mobile device at the destination location, the QR code on the logger device, and
utilizing a connection bridge provided on the mobile device for accessing, by the mobile device, a Uniform Resource Locator (URL) address associated to the QR code where the missing data is downloaded from the logger device to the external control computer via the connection bridge of the mobile device.

## Description

### FIELD OF THE INVENTION

The present invention relates to a method and a system for retrieving recorded monitored data from a wireless logger device monitoring in real time a transported asset's environmental parameters, before closing the shipment order at the destination location.

### BACKGROUND OF THE INVENTION

With the expansion and growth of global sourcing in the supply chain industry, more prevalent interest has been placed on automatic electronic monitoring of environment related parameters to increase food, drug safety, and improve food defense systems throughout all areas of production, processing, storage, transportation, and operations. Food and drug products require proper handling of environment related parameters such as temperature during transport to assure shelf quality, longevity, and safety.

Logger devices are electronic monitoring devices commonly used for these purposes and are configured to be associated to assets such as food, beverages, or pharmaceutical products to automatically monitor and record various environmental related parameters of the assets throughout the supply chain, such as temperature, humidity, acceleration, and air pressure, over time. A recent example of importance of such logger devices is the temperature monitoring of the COVID-19 vaccines, which is a critical monitoring parameter.

Logger devices used for real time monitoring have a wireless communication module to allow them to transmit positional data of the logger devices together with measured environmental related data of the asset wirelessly through a radio tower to an external control computer, hence, enabling a real time supply chain monitoring during the transport of the assets. This means that positional data of the logger device (and thus of the asset) together with measured environmental data such as the temperature of the assets are provided in real time. By doing so, it is possible to monitor the position and the environmental condition of the assets in real time. Thus, issues such as the temperature of the asset being too high or too low may be identified before these issues escalate which allows for proactive actions to prevent the assets from being damaged.

It is common for logger devices to use cellular coverage to store, monitor and transmit environmental related data e.g., every hour during transport from a beginning location to a destination location. The data is typically transmitted to an external control computer or a cloud, to be stored and used for resolution purposes. In the case that there is a lack of cellular coverage available during a portion of the transport, the logger device is instructed to transmit the stored environmental related data during the next transmission event (i.e., in the next hour).

It is also common to close a shipment at the destination location when a number of requirements are met, as an example, the logger device must enter a certain geofence location assigned previously and the logger device must have submitted all the environmental related data to the external control computer. When these requirements are met, an operator is then instructed to close the shipment at the destination location. In the case that everything went well through the shipment, the operator can simply close the shipment with a click of a button. Typically, after pressing the stop shipment button to end the shipment operators are instructed to place all the logger devices within a quarantine box for quality control later down the line.

One of the challenges today is a potential data gap that might arise from a lack of cellular coverage during e.g., the last hour(s) of transport. As an example, this might happen when the logger device tries to transmit the environmental related data in the last hour of transport but is not able to do so, due to a lack of cellular coverage. This causes a gap in the flow of the environmental related data transmitted to the external control computer and the cloud system, which might disrupt the overall monitoring efficiency of the assets transported and prevent the shipment from closing. The only way to retrieve and fill this potential data gap today is by manually plugging the logger device into a computer using a USB connector at the destination location and before the closing of the shipment. By doing so an operator may fill in the external control computer's potential data gap before closing the shipment. However, this process imposes wire specificity and equipment restrictions that might not always be available at destination locations, in turn these restrictions might impact the efficiency and fluidity of the supply chain and make it more time consuming and less user friendly to close the shipment orders at destination locations.

### SUMMARY OF THE INVENTION

It is an object of the invention to make the closing of a shipment order with a potential data gap in the transmitted real time environmental related data at the destination location more efficient and user friendly.

In general, the invention preferably seeks to mitigate, alleviate, or eliminate one or more of the above-mentioned disadvantages of the prior art singly or in any combination. In particular, it may be seen as an object of embodiments of the present invention to provide a method and a system that solves the above-mentioned problems, or other problems.
To better address one or more of these concerns, in a first aspect a method is provided for retrieving potential missing environmental related data of an asset from a real time monitored shipment while the asset is transported from a beginning location to a destination location, comprising:
- associating a logger device, containing a Quick Response (QR) code, to the asset before the start of the transport, where the logger device is configured to collect and store environmental related data and regularly transmit the stored environmental related data together with geographical location data of the logger device to an external control computer,
wherein the method further comprises:
- evaluating by a processor if there is a potential data gap in the monitored and transmitted real time environmental related data for a given time-period and until the end of the transport and before closing the shipment of the asset at the destination location, where in case of a potential data gap is present,
- scanning, by an operator of a camera equipped mobile device at the destination location, the QR code on the logger device, and
- utilizing a connection bridge provided on the mobile device for accessing, by the mobile device, a Uniform Resource Locator (URL) address associated to the QR code where the missing data is downloaded from the logger device to the external control computer via the connection bridge of the mobile device.

The QR code may be printed on the logger device and may be read by any mobile device having a camera and a connection to cellular, Bluetooth or Wi-Fi data.

The URL address may further be configured to provide the operator with instructions such as how to download the potential missing data from the logger device to the external control computer via the connection bridge of the mobile device.

Accordingly, a method is provided to reduce the time it takes to close a shipment order by an operator at a destination location in the presence of a potential data gap in the transmitted real time environmental related data and make the process of uploading said data more efficient and user-friendly by utilizing technology that is incorporated into mobile devices that most people possess today having e.g. Personal Hotspot, Bluetooth or WIFI modules. Moreover, this process might speed up the release of the assets by providing a method to quickly upload the environmental related data without having to rely on specific wired connections.

In an embodiment, the step of evaluating the presence of a potential data gap in the transmitted real time environmental related data comprises initiating a stop shipment process by an operator at the destination location, where if a potential data gap is present, the stop shipment process is automatically cancelled and an indicator on the logger device indicating the presence of said gap is presented to the operator.

In an alternative embodiment, in case the indicator states that the shipment has not been successfully closed, the operator is then instructed to scan the QR code printed on the logger device and utilize the connection bridge on their mobile device to access the URL address associated with the QR code and follow the instructions shown on the URL page to upload the missing environmental related data. A reliable solution is thus provided for a supply chain operator to evaluate the status and upload the monitored missing environmental related data at the end destination, hence speeding up the process of release of the assets at the destination location.

In an embodiment, the QR code contains data structure that is uniquely associated with the logger it is printed on.

In an embodiment, each QR code is uniquely associated with the logger device it is printed on, the unique association can be done by associating the unique serial number of the logger device to the data structure of the QR code printed on said logger device. Thus, the operator may skip the step of inputting the logger device's serial number on the internet page, hence speeding up the process of closing the shipment in the presence of a potential data gap even further.

In another embodiment, the step of evaluating if there is a potential data gap includes informing the operator, by a third party, of a data gap in the transmitted real time environmental related data to the external control computer, where the operator is instructed to scan the QR code and follow a set of instructions when for uploading the missing environmental related data to the external control computer before closing the shipment. Thus, a solution is provided for a third party monitoring the shipment to quickly react to upload the missing environmental related data at the destination location.

In an embodiment, the QR code is attached to an outer side of the logger device or may be presented to an operator via a screen on the logger device. In an embodiment, the missing environmental related data may be selected from one or more of: temperature data, pressure data, acceleration data, light intensity data, and location data of the asset, or any other environmental parameters of the asset measured by the logger device during transport from the beginning location to a destination location.

In an embodiment, the destination location is an area lacking cellular coverage such as a basement, where the logger is unable to connect to an external control computer or a cloud at the destination location.

In another embodiment, the potential data gap indicator is be selected from one or more of a light indicator and/or a text indicator displayed on the of the logger device after initiating the stop shipment process by an operator at the destination location and before the end of the shipment. Accordingly, it is made clear for the operator at the destination location that there is a problem with the shipment, hence allowing them to act swiftly.

In an embodiment, in case a potential data gap is present, the logger devices' screen is configured to instruct the operator to scan the QR code to upload the environmental related data of the asset to the external control computer. Accordingly, there is no need for additional paper-based instructions being transported with the asset, further speeding up the release of the assets at the end destination.

In a second aspect of the invention, a system is provided for retrieving potential missing environmental related data of an asset from a real time monitored shipment while transporting the asset from a beginning location to a destination location, the system comprising:
- a logger device containing a Quick Response (QR) code configured to be associated to the asset before the start of the transport, where the logger device is configured to collect and store environmental related data and regularly monitor and transmit the stored environmental related data to an external control computer,
- a processor configured to:
   ∘ evaluating by a processor if there is a potential data gap in the monitored and transmitted real time environmental related data for a given time-period and until the end of the transport and before closing the shipment of the asset at the destination location, where in case of a potential data gap is present,
- a camera equipped mobile device for:
   ∘ scanning, by an operator of a camera equipped mobile device at the destination location, the QR code on the logger device, and
   ∘ utilizing a connection bridge provided on the mobile device for accessing, by the mobile device, a Uniform Resource Locator (URL) address associated to the QR code where the missing data is downloaded from the logger device to the external control computer via the connection bridge of the mobile device.

Accordingly, an efficient and user-friendly system that avoids technological restrictions such as wire specificity is provided and configured to retrieve environmental related data in the presence of a potential data gap in a real-time monitored shipment transported from a beginning location to a destination location. The processor may in an embodiment be comprised in the external control computer.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 shows a flowchart of a method according to the present invention,
Figure 2 depicts an example of a real time monitored supply chain, wherein a logger associated with an asset is configured to collect and store the monitored and transmitted environmental related data of the asset from a beginning location to a destination location, and
Figures 3 depicts graphically an implementation of the method discussed in relation to the embodiment already mentioned, showing a logger device having a printed QR code on it, and a method of scanning it with a mobile device.

### DESCRIPTION OF EMBOIDMENTS

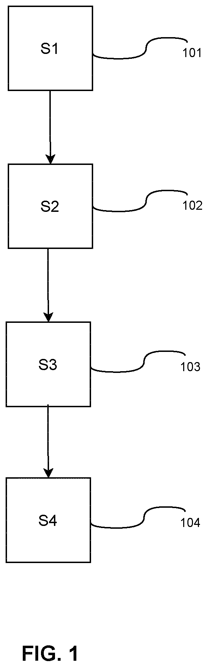

Figure 1 shows a flowchart of a method according to the present invention for retrieving missing environmental related data of an asset from a real time monitored shipment while the asset is transported from a beginning location to a destination location during the closing of the shipment at the destination location by an operator. The stored environmental related data is selected from one or more of the following: temperature data, pressure data, acceleration data, light intensity data, location data, angular position data of the asset

In a first step (S 1) 101, a logger device, containing a Quick Response (QR) code, is associated to the asset before the start of the transport, where the logger device is configured to collect and store environmental related data and regularly transmit the stored environmental related data together with geographical location data of the logger device to an external control computer. The QR code may in an embodiment contain data structure that is uniquely associated with the logger device it is printed on, such as a unique serial number of the logger device.

In a second step (2) 102, it is evaluated by a processor, e.g. a processor in the external control computer, if there is a potential data gap in the monitored and transmitted real time environmental related data for a given time-period and until the end of the transport and before closing the shipment of the asset at the destination location. The potential data gap may be due to a temporal lack of cellular coverage during transport from the beginning location to the destination location, where e.g. the last few hours the asset may be in an area where there is a weak cellular signal.

In case of a potential data gap is present, a third step (3)103 of scanning is performed by an operator of a camera equipped mobile device at the destination location, the QR code on the logger device. This may as an example be any type of a portable computer, such as a mobile phone, table computer or any type of a portable scanner.

In a fourth step (4) 104, a connection bridge provided on the mobile device is utilized in accessing, by the mobile device, a Uniform Resource Locator (URL) address associated to the QR code where the missing data is downloaded from the logger device to the external control computer via the connection bridge of the mobile device.

In an embodiment, each QR code is uniquely associated with the logger it is printed on, the unique association can be done by associating the unique serial number of the logger device to the data structure of the QR code printed on said logger device. By doing so the operator may skip the step of having to input the logger device's serial number on the internet page, hence speeding up the process of closing the shipment in the presence of a potential data gap even further.

The step of evaluating the presence of a potential data gap in the transmitted real time environmental related data comprises initiating a stop shipment process by an operator at the destination location, where if a potential data gap is present, an indicator on the logger device indicating the presence of said gap is presented to the operator.

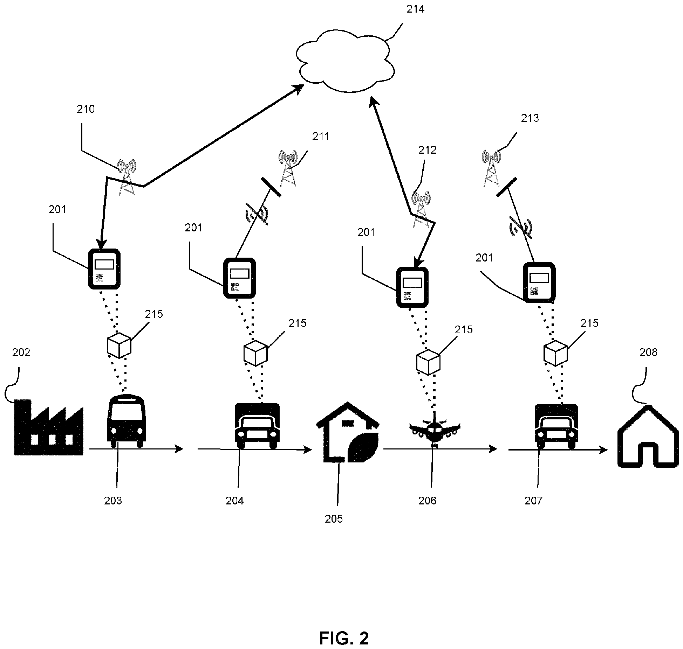

Figure 2 depicts an example of a supply chain 200 according to the present invention, where an asset 215 is transported from a beginning location e.g.: manufacturing facility 202 to a destination location e.g.: storage center 208, and where logger device 201 is associated with asset 215 and configured to monitor the environmental related data of the asset and transmit them by utilizing a communication module 305 through a radio tower 210 to an external control computer 214.

The figure also shows different legs in the supply chain where the logger device is unable to transmit the monitored environmental related data of the asset due to a lack in cellular coverage, as an example when the logger device is associated with truck 204, there is a lack in cellular coverage 216 making it unable to connect to radio tower 211 and transmit the stored environmental related data to external control computer 214, whereas at the beginning in the next leg of the supply chain when the logger device is being transported by plane 206, prior to take-off, the communication module 305 is able to retroactively transmit the missing environmental related data from the last leg of transport I.e. truck leg 204 when there was a lack in cellular coverage.

It is also shown that in the last leg of the supply chain 200, logger device 201 transported within truck 207 is again unable to connect to radio tower 213 due to a lack of cellular coverage 217 making it again unable to transmit the environmental related data of asset 215 to external control computer 214, additionally since this is the last transport leg of supply chain 200 there are no later transport legs where logger device 201 can transmit the environmental related data of asset 215 to external control computer 214. Hence in this case a potential data gap may be present in the transmitted data to external control computer 214 at destination location 208.

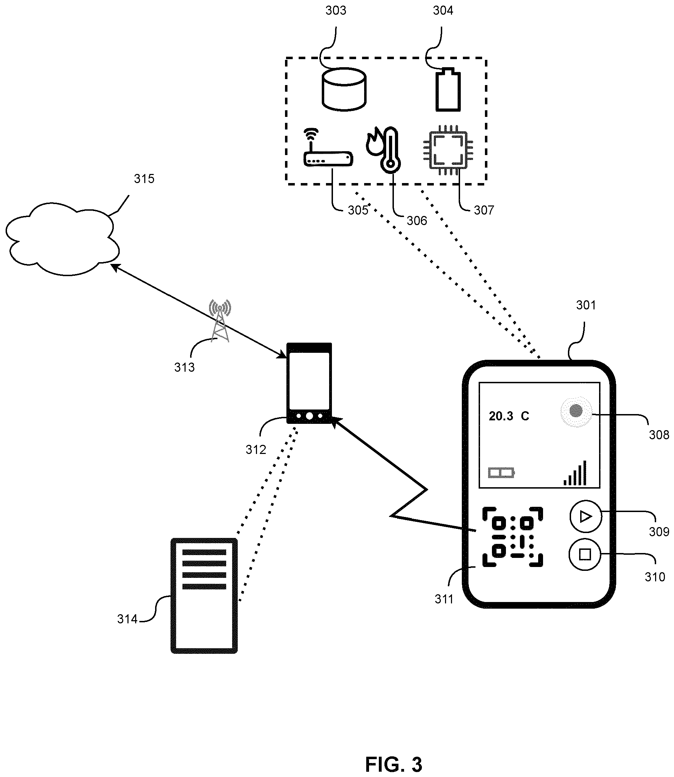

Figure 3 depicts a solution according to the present invention in relation to the problem presented in figure 2. The figure shows the logger device 201 comprising power source 304, storage unit 303, communication module 305, temperature sensor 306, processor 307, where the logger device has an associated QR code 311 printed on the logger device.

In relation to figure 2 at the destination location when an operator initiates a stop shipment process e.g.: pressing stop button 310, the logger device may give an indicator e.g.: indicator 308 indicating the presence of a potential data gap in the transmitted environmental related data of asset 215 to external control computer 214 during supply chain 200, where the operator is then instructed to scan the QR code 311 using a camera equipped device e.g.: their mobile device 312, and utilize the connection bridge on their mobile device to access the URL address associated with the QR code and follow the instructions shown on the URL page 314 to upload the missing data to the external control computer 214.
Accordingly, the presence of a potential data gap in a real time monitored supply chain with a logger device having an associated QR code can be easily mitigated at the destination location and without the need for any additional technology.
While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of retrieving potential missing environmental related data of an asset from a real time monitored shipment while the asset is transported from a beginning location to a destination location, comprising:
• associating a logger device, containing a Quick Response (QR) code, to the asset before the start of the transport, where the logger device is configured to collect and store environmental related data and regularly transmit the stored environmental related data together with geographical location data of the logger device to an external control computer,
wherein the method further comprises:
• evaluating by a processor if there is a potential data gap in the monitored and transmitted real time environmental related data for a given time-period and until the end of the transport and before closing the shipment of the asset at the destination location, where in case of a potential data gap is present,
• scanning, by an operator of a camera equipped mobile device at the destination location, the QR code on the logger device, and
• utilizing a connection bridge provided on the mobile device for accessing, by the mobile device, a Uniform Resource Locator (URL) address associated to the QR code where the missing data is downloaded from the logger device to the external control computer via the connection bridge of the mobile device.

2. The method according to claim 1, wherein the potential data gap is due to a temporal lack of cellular coverage during transport from the beginning location to the destination location.

3. The method according to claim 1 or 2, wherein the QR code contains data structure that is uniquely associated with the logger device it is printed on.

4. The method according to claim 1, wherein the stored environmental related data is selected from one or more of the following: temperature data, pressure data, acceleration data, light intensity data, location data, angular position data of the asset.

5. The method according to claim 1, wherein the connection bridge is selected from one or more of: Personal Hotspot, Bluetooth or WIFI.

6. The method according to any of the preceding claims, wherein the QR code is attached to an outer side of the logger device or is presented to an operator via a screen on the logger device.

7. The method according to any of the preceding claims, wherein the step of evaluating the presence of a potential data gap in the transmitted real time environmental related data comprises initiating a stop shipment process by an operator at the destination location, where if a potential data gap is present, the stop shipment process is automatically cancelled and an indicator on the logger device indicating the presence of said gap is presented to the operator.

8. The method according to claim 7, wherein in case the indicator states that the shipment has not been successfully closed, said step of scanning by the operator of the camera is performed.

9. The method according to claim 7. wherein the potential data gap indicator may be selected from one or more of: a light indicator, and/or a text indicator displayed on the logger device.

10. The method according to claim 3, wherein each QR code is uniquely associated with the logger device it is printed on, the unique association can be done by associating the unique serial number of the logger device to the data structure of the QR code printed on said logger device.

11. The method according to any of the preceding claims, wherein the URL address further provides the operator with instructions data how to upload the missing data to the external control computer.

12. The method according to any of the preceding claims, wherein the step of evaluating if there is a potential data gap includes informing the operator, by a third party, of a data gap in the transmitted real time environmental related data to the external control computer, where the operator is instructed to scan the QR code and follow a set of instructions when for uploading the missing environmental related data to the external control computer before closing the shipment.

13. The method according to any of the preceding claims, wherein in case a potential data gap is present, the logger devices' screen is configured to instruct the operator to scan the QR code to upload the environmental related data of the asset to the external control computer.

14. A system for retrieving potential missing environmental related data of an asset from a real time monitored shipment while transporting the asset from a beginning location to a destination location, the system comprising:
• a logger device containing a Quick Response (QR) code configured to be associated to the asset before the start of the transport, where the logger device is configured to collect and store environmental related data and regularly monitor and transmit the stored environmental related data to an external control computer,
• a processor configured to:
∘ evaluating by a processor if there is a potential data gap in the monitored and transmitted real time environmental related data for a given time-period and until the end of the transport and before closing the shipment of the asset at the destination location, where in case of a potential data gap is present,
• a camera equipped mobile device for:
∘ scanning, by an operator of a camera equipped mobile device at the destination location, the QR code on the logger device, and
utilizing a connection bridge provided on the mobile device for accessing, by the mobile device, a Uniform Resource Locator (URL) address associated to the QR code where the missing data is downloaded from the logger device to the external control computer via the connection bridge of the mobile device.

15. The system according to claim 14, wherein the processor is comprised in the external control computer.
